# EUROPÄISCHE PATENTSCHRIFT

(11) **EP 2 814 661 B1**
(45) Veröffentlichungstag und Bekanntmachung des Hinweises auf die Patenterteilung: **03.10.2018**
(21) Anmeldenummer: 13702337.0
(22) Anmeldetag: 23.01.2013
(51) Int. Cl.: B29C 65/16, B01D 29/11, B01D 29/21, B29K 101/12, B29L 7/00, B29L 31/14

(54) **VERFAHREN ZUR HERSTELLUNG EINES FILTERELEMENTS MITTELS EINER STRAHLUNG**
METHOD OF MANUFACTURING A FILTER ELEMENT USING RADIATION
METHODE DE FABRICATION D'UN ELEMENT DE FILTRE AU MOYEN D'UN RAYONNEMENT

(30) Priorität: 16.02.2012 DE 102012003144
(43) Veröffentlichungstag der Anmeldung: 24.12.2014
(73) Patentinhaber: Hydac Filtertechnik GmbH, 66280 Sulzbach/Saar (DE)
(72) Erfinder: GALIFI, Giuseppe, 66386 St. Ingbert (DE)
(74) Vertreter: Bartels und Partner, Patentanwälte
(86) Internationale Anmeldenummer: PCT/EP2013/000195
(87) Internationale Veröffentlichungsnummer: WO 2013/120579

(56) Entgegenhaltungen:
- DE-A1-102010 011 722
- JP-A- 2004 167 840
- JP-A- 2010 064 325
- JP-A- 2010 253 859
- US-A1- 2005 012 793
- US-A1- 2011 200 802

## Beschreibung

Die Erfindung betrifft ein Verfahren zur Verbindung von Teilkomponenten eines Filterelements, wobei mindestens eine der miteinander zu verbindenden Teilkomponenten aus einem thermoplastischen strahlungsdurchlässigen Material ausgebildet ist und mittels einer Strahlung zumindest teilweise durchstrahlt wird, wobei die Strahlung in mindestens einem Aufschmelzbereich der mindestens einen Teilkomponente derart fokussiert wird, dass durch Materialschmelzung zumindest im jeweiligen Aufschmelzbereich die Teilkomponenten nach ihrem Erkalten fest miteinander verbunden sind.

Filterelemente kommen auf vielen Gebieten der Technik für die Filtration von strömungsfähigen Medien, wie Hydraulikflüssigkeiten, Schmierstoffen, Kraftstoffen und dergleichen zum Einsatz. Solche Filterelemente werden aus Gründen der rationellen Fertigung, zur Erzielung eines geringen Gewichts und der einfachen Entsorgung und Wiederverwertung vorzugsweise aus metallfreien Komponenten aufgebaut, wobei ein Filtermedium, das regelmäßig einen bei der Filtration die Reinseite bildenden, inneren Filterraum umgibt, von dem zu reinigenden strömungsfähigen Medium von außen nach innen durchströmt wird. Üblicherweise ist der Filterraum an axialen Enden des Filterelements durch jeweils eine Endkappe abgeschlossen. Wesentliche Bauteile eines derartigen Filterelements, wie die genannten Endkappen oder auch ein Stützrohr oder eine das Filtermedium nach außen abschließende Hülle, sind typischerweise als Spritzgussformteile oder auch als Composite-Bauteile mittels Spritzgussformverfahren oder Laminierverfahren gebildet und werden mittels Klebeverfahren oder auch Laser-Durchstrahl-Schweißverfahren miteinander verbunden.

Die WO 2008/113399 A1 beschreibt ein Verfahren zur Verbindung von Teilkomponenten eines Filterelements. Bei dem bekannten Verfahren wird zwischen einem Filtermedium als erster Teilkomponente, die einen inneren Filterhohlraum umgibt und ein heißsiegelbares Material enthält, und einer einen Abschluss des Filterhohlraums an zumindest einem Ende bildenden Endkappe als zweiter Teilkomponente aus thermoplastischem, laserstrahlungsdurchlässigem Material eine laserstrahlungsundurchlässige Sperrschicht ausgebildet. Beim Verschweißen von Endkappe und Filtermedium wird an die Sperrschicht angrenzendes laserstrahlungsdurchlässiges Material mit Laserstrahlung bzw. Laserenergie derart durchstrahlt, dass durch Erhitzen eines an die Sperrschicht angrenzenden Bereichs der zweiten Teilkomponente oder der Sperrschicht selbst thermoplastisches Material aufgeschmolzen wird und als Fügeelement nach dem Erkalten die Schweißverbindung bildet.

Die bekannten Laser-Durchstrahlschweißverfahren zur Verbindung von Teilkomponenten eines Filterelementes erfordern neben einer laserstrahlungsdurchlässigen, anders ausgedrückt lasertransparenten, Teilkomponente eine laserstrahlungsundurchlässige, anders ausgedrückt laserabsorbierende, Teilkomponente. Dies schränkt die Materialwahl für die miteinander zu verbindenden Teilkomponenten ein. Werden Pigmente, wie Rußpartikel, der laserstrahlungsundurchlässigen Teilkomponente zugesetzt, sind mitunter nicht erwünschte Farbeffekte hinzunehmen. Zur Verbindung von Teilkomponenten aus Materialien mit gleichen oder ähnlichen optischen Eigenschaften wird als Absorber eine Zwischenfolie aus einem Schweißzusatzwerkstoff, wie die oben genannte Sperrschicht, zwischen die zu verbindenden Teilkomponenten eingebracht. Neben zusätzlichen Arbeitsschritten zur Einbringung eines Absorbers sind mitunter kostenintensive Additive oder Oberflächenbeschichtungen der zu verbindenden Teilkomponenten erforderlich. Des Weiteren kann die Vorfertigung einer Außenhülle zur Ummantelung eines Filterelements bestehend aus Endkappen, Stützrohr und Filtermedium, zu dem Problem führen, dass die Außenhülle entweder zu eng an der Filtermatte anliegt oder von der Filtermatte zumindest bereichsweise beabstandet ist, anders ausgedrückt können keine Toleranzen der Filtermatte im Durchmesser durch die vorgefertigte Außenhülle ausgeglichen werden.

Die JP 2004 167840 A betrifft ein Filterelement mit einem Gehäuse dessen Deckel aus einem lasertransparentem Kunststoff besteht, der im Laser-Durchstrahlschweißverfahren mit dem Gehäuse verbunden wird, das aus einem Kunststoff besteht, der mit Kohlenstoff vermischt und somit für den Laserstrahl undurchlässig ist, so dass der Kunststoff teilweise von dem Laserstrahl geschmolzen werden kann. Innerhalb des Gehäuses ist eine lasertransparente textile Filtermatte angeordnet, die im Laser-Durchstrahlschweißverfahren ebenfalls mit dem undurchlässigen Gehäuse verbunden wird.

Die US 2005/0012793 A1 betrifft eine Tintenpatrone, in deren thermoplastischem Gehäuse ein Filter angeordnet ist, der aus zwei Lagen unterschiedlichen synthetischen Materials mit unterschiedlichen Laserabsorptionsraten besteht. Die beiden Lagen sind im Laser-Durchstrahlschweißverfahren mit einem den Laserstrahl absorbierenden Gehäuserahmen verschweißt, indem ein Laserstrahl durch den Filter gleitet wird und den Gehäuserahmen erhitzt, so dass ein Teil des Gehäuserahmens schmilzt und in die Poren des Filters fließt, der nach dem Erkalten des Thermoplasts mit dem Gehäuserahmen verbunden ist.

Die gattungsfremde US 2011/0200802 A1 betrifft ein Verfahren zur Herstellung von Schweißnähten zwischen transparenten polymeren Materialien.

Bei dem Verfahren wird ein Laser verwendet, der einen gepulsten Laserstrahl mit einer Wellenlänge innerhalb des Transparenzfensters zumindest eines der beiden polymeren Materialien herstellt. Der Laserstrahl wird fokussiert auf einen Schweißpunkt, der dadurch dunkel wird. Anschließend wird der Laserstrahl fokussiert auf den dunklen Schweißpunkt oder nahe dem dunklen Schweißpunkt, sodass eine Schweißzone zwischen den beiden transparenten polymeren Materialien ausgebildet wird.

Die Erfindung stellt sich die Aufgabe, mit vergleichsweise einfachen und wenigen Schritten Teilkomponenten eines Filterelements mittels einer Strahlung miteinander zu verbinden und dabei die Materialauswahl für die Teilkomponente zu erweitern, welche mit der durchstrahlten Teilkomponente zu verbinden ist.

Diese Aufgabe wird gelöst durch ein Verfahren mit den Merkmalen von Patentanspruch 1 in seiner Gesamtheit. Das erfindungsgemäße Verfahren zeichnet sich dadurch aus, dass der Aufschmelzbereich in der strahlungsdurchlässigen Teilkomponente erzeugt wird und dass zumindest eine der beiden Teilkomponenten folienartig ausgebildet ist. Im Gegensatz zu den bekannten Verfahren sind bei dem erfindungsgemäßen Verfahren strahlungsundurchlässige Materialien entbehrlich. Erfindungsgemäß ist der Einsatz einer Zwischenfolie oder Sperrschicht als Absorber bzw. eines Schweißzusatzwerkstoffes entbehrlich, so dass diesbezügliche Arbeitsschritte entfallen.

Die miteinander zu verbindenden Teilkomponenten können Endbereiche eines Folienzuschnitts zur Ausbildung einer mantelartigen Außenhülle des Filterelements sein. Die einfache Durchführung des erfindungsgemäßen Verfahrens ermöglicht eine derartige Ausbildung und Anbringung der Außenhülle an einem Filterelement, dass die Außenhülle optimiert auf die zu umhüllende Filtermatte bzw. das zu umhüllende Filtermedium angepasst werden kann.

Bei einer vorteilhaften Variante des erfindungsgemäßen Verfahrens werden die Teilkomponenten in mindestens einem Verbindungsbereich unmittelbar aneinandergelegt und mittels einer an die Materialien der zu verbindenden Teilkomponenten angepassten Strahlung miteinander verschweißt. Bei in der Art von Einzellagen ausgebildeten Teilkomponenten sind vorzugsweise beide benachbarte Teilkomponenten schmelzbar gestaltet. Der jeweilige Aufschmelzbereich kann an einer räumlichen Grenze, an welcher beide Teilkomponenten mit geringem Abstand zueinander angeordnet sind oder aneinander anliegen, angeordnet sein, so dass bei der Durchführung des erfindungsgemäßen Verfahrens beide Teilkomponenten im jeweiligen Aufschmelzbereich eine Materialschmelzung erfahren. Der angesprochene geringe Abstand zwischen den beiden Teilkomponenten kann in der Art eines Hohlraumes dazu genutzt werden, Schweißwärme nach außen abzuführen oder einen vorzugsweise strahlungsdurchlässigen Schweißzusatzwerkstoff einzubringen, der die beiden benachbarten Teilkomponenten dann aneinanderhält.

Bevorzugt ist die Teilkomponente im Aufschmelzbereich frei von die Strahlung absorbierenden und in Wärmeenergie umsetzenden Additiven, wie beispielsweise Farbstoffen, Rußpartikeln oder sonstigen Farbpigmenten.

Hierbei sind vorzugsweise die Strahlform, Strahlintensität und/oder die Fokussierung der Strahlung derart gewählt, dass im jeweiligen Aufschmelzbereich mindestens ein Anlagepunkt, eine Anlagelinie oder eine Anlagefläche der miteinander zu verbindenden Teilkomponenten liegt bzw. verläuft. Die zur bereichsweisen Aufschmelzung des Materials der jeweiligen Teilkomponente erforderliche Energie wird zweckmäßigerweise dadurch eingebracht, dass die Strahlung auf den jeweiligen Anlagepunkt, die jeweilige Anlagelinie bzw. die jeweilige Anlagefläche konzentriert bzw. fokussiert wird. Vor Eintritt in den jeweiligen Aufschmelzbereich kann die Strahlung in mehrere, typischerweise zwei, Strahlen geringerer Strahlintensität geteilt werden, die sich im Aufschmelzbereich der jeweiligen Teilkomponente(n) zur Gesamtstrahlung gewünschter Strahlungsform und Strahlintensität konstruktiv überlagern.

Der Aufschmelzbereich wird besonders vorteilhaft mit einem Durchmesser oder einer Breite von weniger als 1 mm, bevorzugt weniger als 0,5 mm, weiter bevorzugt weniger als 0,1 mm, erzeugt.

Vorteilhafterweise ist die Wellenlänge der Strahlung in Abhängigkeit vom Absorptionsvermögen des Materials der jeweiligen Teilkomponente derart gewählt, dass eine zumindest teilweise Absorption der Strahlung vorzugsweise durch beide miteinander zu verbindende Teilkomponenten erfolgt. Der Absorptionskoeffizient für die ausgewählte Wellenlänge der Strahlung beträgt vorzugsweise zwischen 5% und 40%, besonders bevorzugt zwischen 10% und 20%. Das Verhältnis von Strahlung und Absorptionsvermögen ist derart gewählt, dass der Eintritt von Strahlung bzw. Strahlen an einer Außenoberfläche der strahlungsdurchlässigen Teilkomponente dort keinen Schmelzeffekt bewirkt, da die eingebrachte Energie als Wärme in angrenzende, nicht von der Strahlung bzw. vom jeweiligen Strahl beaufschlagte Materialbereiche abgeleitet wird. In Bereichen höherer Strahlintensität, die aufgrund der Fokussierung der Strahlung bzw. der Strahlen im jeweiligen Aufschmelzbereich, insbesondere an der punkt-, linien- oder flächenförmigen Anlage beider Teilkomponenten, auftreten, kommt es zu einem Wärmestau und infolgedessen zu einer thermischen Aufschmelzung des Materials zumindest im jeweiligen Aufschmelzbereich.

Typischerweise wird eine Laserstrahlung mit einer Wellenlänge bevorzugt in einem Wellenlängenbereich von 400nm bis 2000nm eingesetzt. Die Laserstrahlung bzw. die Laserstrahlen weisen typischerweise ein Gauß'sches Strahlenprofil auf. Durch eine geeignete Wahl der Laserstrahlung, ihrer Aufteilung und Fokussierung bzw. Überlagerung in Anlagebereichen der zu verbindenden Teilkomponenten können Teilkomponenten aus Materialien mit ähnlichen oder gleichen optischen Eigenschaften, insbesondere aus dem gleichen Material, in einfacher Weise fest miteinander verbunden bzw. verschweißt werden.

Weiter ist es vorteilhaft, die Teilkomponenten im jeweiligen Verbindungbereich mittels einer gepulsten Strahlung miteinander zu verschweißen. Die Intensität und die Länge eines oder mehrerer Strahlungspulse, wie Laserpulse, werden entsprechend dem zur Aufschmelzung entsprechender Materialbereiche erforderlichen Energieeintrag gewählt.

Zweckmäßigerweise ist die Ausdehnung des jeweiligen Aufschmelzbereichs geringer als die Dicke der jeweiligen Teilkomponente. Auf diese Weise bleiben bei Durchführung des erfindungsgemäßen Verfahrens außenoberflächennahe Bereiche bzw. entsprechende Teilvolumina der jeweiligen Teilkomponente weitestgehend unbeeinflusst, so dass beispielsweise an einer Außenoberfläche der jeweiligen Teilkomponente keine ungewünschten Formveränderungen auftreten.

Bevorzugt ist zumindest die im jeweiligen Aufschmelzbereich aufgeschmolzene Teilkomponente aus einem Kunststoffmaterial ausgebildet. Es ist jedoch besonders vorteilhaft, jede der Teilkomponenten aus einem Kunststoffmaterial auszubilden, was eine Recyclingfähigkeit optimalerweise des gesamten Filterelements ermöglicht.

Weitere miteinander zu verbindenden Teilkomponenten können eine Endkappe, ein Stützrohr oder Teile derselben sein.

Weitere Vorteile und Merkmale der Erfindung ergeben sich aus den Figuren und der nachfolgenden Beschreibung der Zeichnung. Die in den Figuren gezeigten Merkmale sind rein schematisch und nicht maßstäblich zu verstehen. Es zeigt:
- Fig. 1: eine schematische Darstellung der Durchführung des erfindungsgemäßen Verfahrens mittels einer optischen Einrichtung;
- Fig. 2: eine perspektivische Ansicht eines Filterelements mit erfindungsgemäß miteinander verbundenen Endbereichen eines Folienzuschnitts zur Ausbildung einer mantelartigen Außenhülle des Filterelements;
- Fig. 3: eine weitere perspektivische Ansicht auf das Filterelement aus Fig. 2 mit abgenommenen Endkappen;
- Fig. 4: einen vergrößerten Ausschnitt des Filterelements aus Fig. 3; und
- Fig. 5: einen Längsschnitt durch einen oberen Teil eines weiteren Filterelements mit aneinandergefügten Teilkomponenten einer Endkappe.

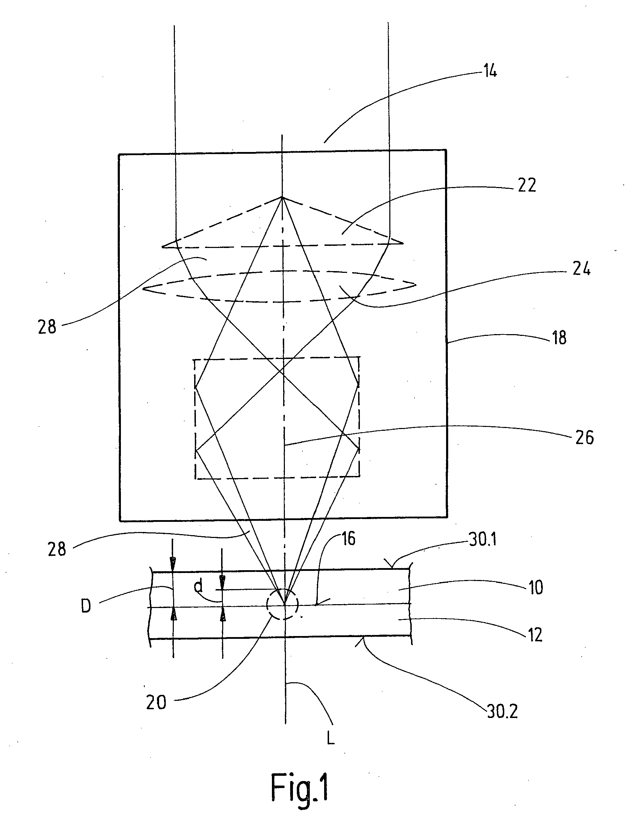

Fig. 1 zeigt in einem schematischen Schnitt, wie eine obere erste Teilkomponente 10 mit einer unteren zweiten Teilkomponente 12 mittels einer Strahlung 14, genauer eine Laserstrahlung, an einer Anlagefläche 16 miteinander verschweißt wird. Die beiden Teilkomponenten 10, 12 sind jeweils folienartig ausgebildet und können beispielsweise Endbereiche eines Folienzuschnitts zur Ausbildung einer Außenhülle eines in Fig. 1 nicht gezeigten Filterelements sein. Die lagenartig aufeinandergelegten Teilkomponenten 10, 12 liegen an der Anlagefläche 16 unmittelbar, d.h., ohne dazwischen angeordnete Zwischenfolie oder Sperrschicht als Absorber aneinander an. Mittels einer optischen Einrichtung 18 wird die von einer nicht dargestellten Lichtquelle, hier einer Laserquelle, emittierte Strahlung 14 in einem Aufschmelzbereich 20, welcher sich ausgehend von der Anlagefläche 16 sowohl in die erste Teilkomponente 10 als auch in die zweite Teilkomponente 12 erstreckt, fokussiert. Die erste und die zweite Teilkomponente 10, 12 bestehen aus gleichartigen thermoplastischen Materialien mit bevorzugterweise identischen optischen Eigenschaften. Die Wellenlänge der Strahlung 14 ist an die Absorptionseigenschaften des thermoplastischen Materials der Teilkomponenten 10, 12 derart angepasst, dass der Absorptionskoeffizient für die ausgewählte Wellenlänge vorzugsweise zwischen 5% und 40%, besonders bevorzugt zwischen 10% und 20% liegt.

Die optische Einrichtung 18 umfasst im Strahlgang der Strahlung 14 nacheinander angeordnet ein als Axicon-Prisma ausgebildetes erstes optisches Element 22, ein als Fokussierlinse ausgebildetes zweites optisches Element 24 und ein als Strahlreflektor ausgebildetes drittes optisches Element 26. Mittels des ersten und des zweiten optischen Elements 22, 24 wird die Strahlform der Strahlung 14 derart beeinflusst, dass ein Strahl 28 mit einem ringförmigen Strahlungsquerschnitt mit höherer Lichtintensität gegenüber einem inneren, nicht beleuchteten Bereich mit geringerer Lichtintensität ausgebildet und fokussiert ist. Das dritte optische Element 26 erleichtert die Fokussierung bzw. Konzentrierung des ringförmigen Strahls 28 auf den Mittelpunkt des kugelförmigen Aufschmelzbereichs 20 als Fokuspunkt. Es versteht sich, dass die optische Einrichtung 18 auf der anderen Seite angeordnet sein kann und die Strahlung 14 die zweite Teilkomponente 12 durchdringen kann. Zudem können zwei optische Einrichtungen 18 auf einer oder beiden Seiten der aneinandergelegten Teilkomponenten 10, 12 vorgesehen sein, wobei der jeweilige Strahl 28 auf den Aufschmelzbereich 20 fokussiert wird.

Im Aufschmelzbereich 20 bildet sich aufgrund des Energieeintrags durch die Strahlung bzw. den Strahl 28 ein derartiger Wärmestau, dass es zu einer lokalen, auf den Aufschmelzbereich 20 begrenzten Aufschmelzung des Materials der jeweiligen Teilkomponente 10, 12 kommt. Nach Abschluss der Bestrahlung erkaltet das im Aufschmelzbereich 20 aufgeschmolzene Material, wodurch die beiden Teilkomponenten 10, 12 materialschlüssig fest miteinander verbunden werden. Der Energieeintrag durch die Strahlung 14 ist derart gewählt, dass eine Ausdehnung d des Aufschmelzbereichs 20 in der jeweiligen Teilkomponente 10, 12 kleiner als die Dicke D der jeweiligen Teilkomponente 10, 12 gewählt ist, wodurch ungewünschte Verformungseffekte an einer Außenoberfläche 30.1, 30.2 der jeweiligen Teilkomponente 10, 12 vermieden werden. Die Ausdehnung d und die Dicke D werden ausgehend von der Anlagefläche 16 in Richtung L der Strahlung 14 berechnet. Der Aufschmelzbereich 20 ist kugelförmig ausgebildet, andere räumliche Ausgestaltungen sind denkbar. Die Richtung L der Strahlung 14 entspricht einer Flächennormalen der Anlagefläche 16, es sind jedoch auch andere Einfallwinkel der Strahlung 14 denkbar.

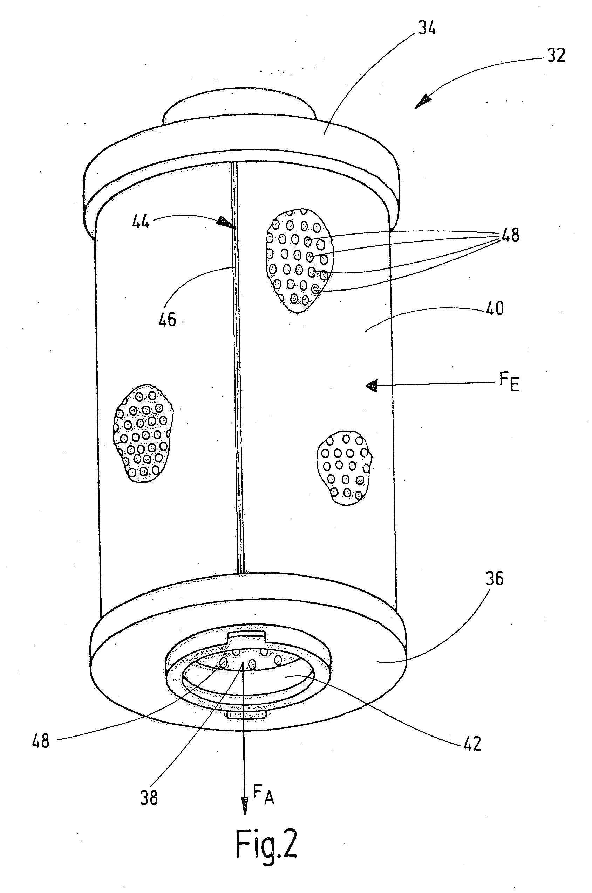

Fig. 2 zeigt in perspektivischer Darstellung ein rohrzylinderförmiges Filterelement 32 mit einer oberen Endkappe 34 und einer unteren Endkappe 36, zwischen denen sich ein inneres Stützrohr 38 und eine Außenhülle 40 erstrecken. Das Filterelement 32 wird von Fluid, wie mit Pfeilen F_{E}, F_{A} angedeutet, von außen nach innen durchströmt. Beim Durchströmen des Filterelements 32 wird Fluid durch eine zwischen der Außenhülle 40 und dem Stützrohr 38, in Fig. 2 nicht gezeigte Filtermatte von Partikeln abgereinigt. Abgereinigtes Fluid verlässt das Filterelement 32 durch einen als lochartiger Durchlass in der unteren Endkappe 36 ausgebildeten Fluidauslass 42.

Die Außenhülle 40 ist derart am Filterelement 32 ausgebildet, dass Endbereiche eines Folienzuschnitts in einem Verbindungsbereich 44, welcher sich in Längserstreckung von der unteren Endkappe 36 zur oberen Endkappe 34 erstreckt, unmittelbar aufeinandergelegt und mittels des in Fig. 1 dargestellten Verfahrens an einer strichlinienartigen Schweißnaht 46 miteinander verschweißt werden. Auf diese Weise ist die mantelartige Außenhülle 40 mit der erforderlichen, in radialer Richtung wirkenden Anpresskraft am Filterelement 32 angebracht. Die Außenhülle 40 bzw. der entsprechende Folienabschnitt sind zumindest bereichsweise, zweckmäßigerweise vollflächig, fluiddurchlässig mit mehreren Fluiddurchlässen 48 (nicht sämtliche bezeichnet) ausgebildet. Entsprechend sind Fluiddurchlässe 48 am Stützrohr 38 ausgebildet. Die Endkappen 34, 36, die (nicht gezeigte) Filtermatte und das Stützrohr 38 sind zweckmäßigerweise aus einem Kunststoffmaterial ausgebildet. Das Material der Außenhülle 40 ist ebenfalls ein Kunststoffmaterial, dessen Absorptionseigenschaften zur Durchführung des in Fig. 1 dargestellten Verfahrens zur Ausbildung der Schweißnaht 46 im Verbindungsbereich 44 geeignet gewählt sind.

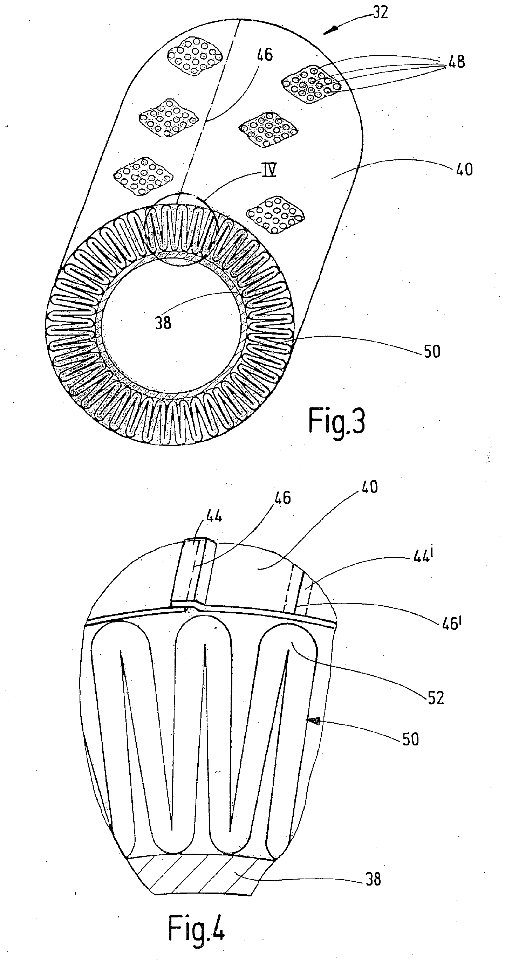

In Fig. 3 ist das Filterelement 32 aus Fig. 2 ohne Endkappen 34, 36 in einer gegenüber Fig. 2 "nach hinten gekippten" Perspektive dargestellt. Zwischen der rohrzylinderförmigen, mit Fluiddurchlässen 48 versehenen Außenhülle 40 und dem ebenfalls rohrzylinderförmigen, fluiddurchlässig ausgebildeten, konzentrisch innerhalb der Außenhülle 40 angeordneten Stützrohr 38 ist eine plissierte Filtermatte 50 mit aneinanderliegenden Filterfalten angeordnet. Durch das Plissieren bzw. Auffalten der Filtermatte 50 wird die im zwischen Außenhülle 40 und Stützrohr 38 angeordneten Filterraum wirksame Filterfläche erhöht.

Dem in Fig. 4 gezeigten vergrößerten Bereich aus Fig. 3 ist entnehmbar, dass zur Ausbildung der Schweißnaht 46 zur Ausbildung der mantelartigen Außenhülle 40 am Filterelement 32 sich die Endbereiche eines entsprechenden Folienzuschnitts überdecken und unmittelbar aneinandergelegt sind, so dass beim Energieeintrag durch eine Strahlung 14, wie in Fig. 1 gezeigt, die Schweißnaht 46 zur Verbindung der beiden Endbereiche ausgebildet werden kann. Weiter ist es vorstellbar, in weiteren Verbindungsbereichen 44' die Außenhülle 40 bzw. den jeweiligen Folienzuschnitt mit einer Filterfalte 52 zu verbinden, genauer erfindungsgemäß zu verschweißen. Zudem kann erfindungsgemäß eine Verbindung zwischen Filterfalten 52 der Filtermatte 50 und dem Stützrohr 38 hergestellt werden. Auf diese Weise kann die Filtermatte 50, genauer deren Filterfalten 52, im Filterraum zwischen der Außenhülle 40 und dem Stützrohr 38 zusätzlich fixiert werden.

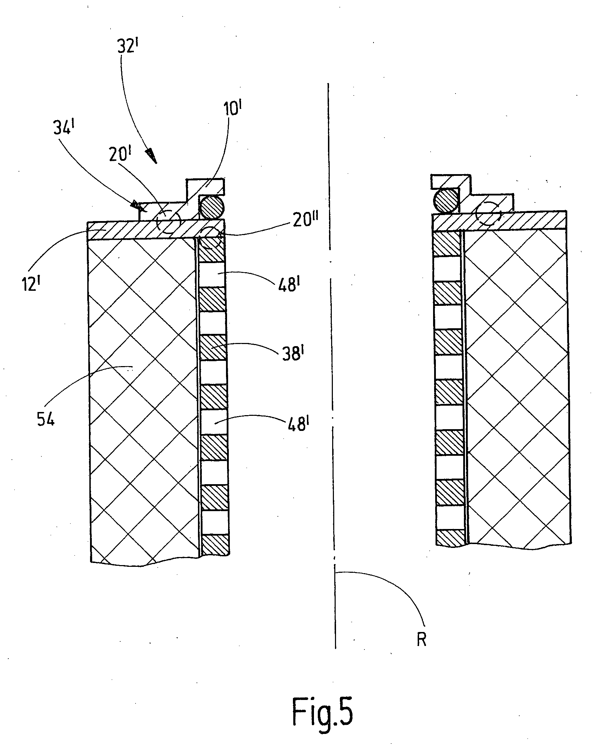

Fig. 5 zeigt die Ausgestaltung eines Filterelements 32', dessen obere Endkappe 34' aus einer ersten Teilkomponente 10' und einer zweiten Teilkomponente 12' zusammengesetzt ist. Die Teilkomponenten 10', 12' der Endkappe 34' sind durch thermisches Aufschmelzen mittels einer Strahlung 14, wie in Fig. 1 veranschaulicht, in einem Aufschmelzbereich 20' mit anschließendem Erkalten miteinander fest verbunden. Zudem kann die zweite Teilkomponente 12' der oberen Endkappe 34' oder die bereits fertig gestellte obere Endkappe 34' in einem weiteren Aufschmelzbereich 20" mit einem inneren Stützrohr 38' des Filterelements 32' verschweißt werden. Das Stützrohr 38' ist mit Fluiddurchlässen 48' versehen, so dass im außen an das Stützrohr 38' gelegten Filtermedium 54 filtriertes Fluid abgereinigt aus dem Filterelement 32' geführt werden kann. Ferner besteht derart die Möglichkeit, auch die Endkappe 34' direkt mit dem vorzugsweise plissierten Filtermedium 54 zu verschweißen.

Das Filterelement 32' einschließlich der oberen Endkappe 34', dem Filtermedium 54 und dem Stützrohr 38' ist rotationssymmetrisch zur Rotationsachse R ausgebildet. Die obere Endkappe 34' bzw. deren erste Teilkomponente 10' ist derart ausgebildet, dass ein Ringkörper 56 in eine nutartige Einfassung eingelegt werden kann. Außen am Filtermedium 54 kann eine in Fig. 5 nicht gezeigte mantelartige Außenhülle vorgesehen sein. Es versteht sich, dass alternativ oder zusätzlich eine in Fig. 5 nicht gezeigte untere Endkappe des Filterelements 32' aus zwei oder mehr Teilkomponenten 10', 12' ausgebildet und zusammengeschweißt sein kann.

## Patentansprüche

1. Verfahren zur Verbindung von Teilkomponenten (10, 12) eines Filterelements (32, 32'), wobei mindestens eine der miteinander zu verbindenden Teilkomponenten (10, 12) aus einem thermoplastischen strahlungsdurchlässigen Material ausgebildet ist und mittels einer von einer Lichtquelle, insbesondere einer Laserquelle, emittierten Strahlung (14) zumindest teilweise durchstrahlt wird, wobei die Strahlung (14) in mindestens einem Aufschmelzbereich (20) der mindestens einen Teilkomponente (10, 12) derart fokussiert wird, dass durch Materialschmelzung zumindest im jeweiligen Aufschmelzbereich (20) die Teilkomponenten (10, 12) nach ihrem Erkalten fest miteinander verbunden sind, **dadurch gekennzeichnet, dass** der Aufschmelzbereich (20) in der strahlungsdurchlässigen Teilkomponente (10, 12) erzeugt wird und dass zumindest eine der beiden Teilkomponenten (10, 12) folienartig ausgebildet ist.

2. Verfahren nach Anspruch 1, **dadurch gekennzeichnet, dass** die beiden Teilkomponenten (10, 12) jeweils folienartig ausgebildet sind.

3. Verfahren nach einem der vorhergehenden Ansprüche, **dadurch gekennzeichnet, dass** die Teilkomponenten (10, 12) in mindestens einem Verbindungsbereich (44, 44') bevorzugt unmittelbar aneinandergelegt werden und mittels einer an die Materialien der zu verbindenden Teilkomponenten (10, 12) angepassten Strahlung (14) miteinander verschweißt werden.

4. Verfahren nach einem der vorhergehenden Ansprüche, **dadurch gekennzeichnet, dass** die Teilkomponente (10, 12) im Aufschmelzbereich (20) frei von die Strahlung (14) absorbierenden und in Wärmeenergie umsetzenden Additiven ist, wie beispielsweise Farbstoffen, Rußpartikeln oder sonstigen Farbpigmenten.

5. Verfahren nach einem der vorhergehenden Ansprüche, **dadurch gekennzeichnet, dass** die Strahlform, Strahlintensität und/oder die Fokussierung der Strahlung (14) derart gewählt sind, dass im jeweiligen Aufschmelzbereich (20) mindestens ein Anlagepunkt, mindestens eine Anlagelinie oder mindestens eine Anlagefläche (16) zwischen den jeweils miteinander zu verbindenden Teilkomponenten (10, 12) liegt bzw. verläuft.

6. Verfahren nach einem der vorhergehenden Ansprüche, **dadurch gekennzeichnet, dass** der Aufschmelzbereich (20) mit einem Durchmesser oder einer Breite von weniger als 1 mm, bevorzugt weniger als 0,5 mm, weiter bevorzugt weniger als 0,1 mm, erzeugt wird.

7. Verfahren nach einem der vorhergehenden Ansprüche, **dadurch gekennzeichnet, dass** die Wellenlänge der Strahlung (14) in Abhängigkeit vom Absorptionsvermögen des Materials der jeweiligen Teilkomponente (10, 12) derart gewählt wird, dass eine zumindest teilweise Absorption der Strahlung (14) vorzugsweise durch beide miteinander zu verbindende Teilkomponenten (10, 12) erfolgt.

8. Verfahren nach einem der vorhergehenden Ansprüche, **dadurch gekennzeichnet, dass** eine Laserstrahlung mit einer Wellenlänge bevorzugt in einem Wellenlängenbereich von 400nm bis 2000nm eingesetzt wird.

9. Verfahren nach einem der vorhergehenden Ansprüche, **dadurch gekennzeichnet, dass** die Teilkomponenten (10, 12) mittels einer gepulsten Strahlung (14) miteinander verschweißt werden.

10. Verfahren nach einem der vorhergehenden Ansprüche, **dadurch gekennzeichnet, dass** die Ausdehnung (d) des jeweiligen Aufschmelzbereichs (20) geringer als die Dicke (D) der jeweiligen Teilkomponente (10, 12) ist.

11. Verfahren nach einem der vorhergehenden Ansprüche, **dadurch gekennzeichnet, dass** zumindest die im jeweiligen Aufschmelzbereich (20) aufgeschmolzene Teilkomponente (10, 12) aus einem Kunststoffmaterial ausgebildet ist.

12. Verfahren nach einem der vorhergehenden Ansprüche, **dadurch gekennzeichnet, dass** weitere miteinander zu verbindenden Teilkomponenten (10, 12) eine Endkappe (34, 34', 36), ein Stützrohr (38, 38') oder Teile derselben sind.

13. Verfahren nach einem der vorhergehenden Ansprüche, **dadurch gekennzeichnet, dass** die miteinander zu verbindenden Teilkomponenten (10, 12) Endbereiche eines Folienzuschnitts zur Ausbildung einer mantelartigen Außenhülle (40) des Filterelements (32, 32') sind.

## Claims

1. Method for connecting subcomponents (10, 12) of a filter element (32, 32'), wherein at least one of the subcomponents (10, 12) to be connected to one another is formed from a thermoplastic radiation-permeable material and is at least partially radiated through by means of radiation (14) emitted by a light source, in particular a laser source, wherein the radiation (14) in at least one melting region (20) of the at least one subcomponent (10, 12) is focused in such a way that the subcomponents (10, 12) are firmly connected to one another by material melting at least in the respective melting region (20) after cooling, **characterised in that** the melting region (20) is produced in the radiation-permeable subcomponent (10, 12) and that at least one of the two subcomponents (10, 12) is a film-like product.

2. Method according to Claim 1, **characterised in that** the two subcomponents (10, 12) are each formed as a film-like product.

3. Method according to one of the preceding Claims, **characterised in that** the subcomponents (10, 12) are preferably laid directly against one another in at least one connection region (44, 44') and are welded together by means of radiation (14) adapted to the materials of the subcomponents (10, 12) to be joined.

4. Process according to one of the preceding Claims, **characterised in that** the subcomponents (10, 12) in the melting region (20) are free of radiation (14) absorbing additives which convert it into heat energy, such as dyes, soot particles or other colour pigments.

5. Method according to one of the preceding Claims, **characterised in that** the beam shape, beam intensity and / or the focus of the radiation (14) are selected in such a way that at least one contact point, at least one contact line or at least one contact surface (16) lies or extends in the respective melting region (20) between the subcomponents (10, 12) to be connected to one another.

6. Method according to one of the preceding Claims, **characterised in that** the melting region (20) is produced with a diameter or a width of less than 1 mm, preferably less than 0.5 mm, further preferably less than 0.1 mm.

7. Method according to one of the preceding Claims, **characterised in that** the wavelength of the radiation (14) is selected as a function of the absorption capacity of the material of the respective subcomponents (10, 12) in such a way that at least a partial absorption of the radiation (14) takes place, preferably through both subcomponents (10, 12) to be connected to one another.

8. Method according to one of the preceding Claims, **characterised in that** a laser radiation is used with a wavelength preferably in a wavelength range of 400 nm to 2000 nm.

9. Method according to one of the preceding Claims, **characterised in that** the subcomponents (10, 12) are welded together by means of pulsed radiation (14).

10. Method according to one of the preceding Claims, **characterised in that** the expansion (d) of the respective melting region (20) is less than the thickness (D) of the respective subcomponents (10, 12).

11. Method according to one of the preceding Claims, **characterised in that** at least the subcomponents (10, 12) melted in the respective melting region (20) are formed from a plastic material.

12. Method according to one of the preceding Claims, **characterised in that** further subcomponents (10, 12) to be joined together are an end cap (34, 34', 36), a support tube (38, 38') or parts thereof.

13. Method according to one of the preceding Claims, **characterised in that** the subcomponents (10, 12) to be joined together are end regions of a film blank for forming a wrap-like outer shell (40) of the filter element (32, 32').

## Revendications

1. Procédé pour relier des éléments (10, 12) constitutifs d'un élément (32, 32') de filtre, au moins l'un des éléments (10, 12) constitutifs à relier entre eux étant constitué d'un matériau thermoplastique pouvant être traversé par un rayonnement et étant traversé au moins en partie par un rayonnement (14) émis par une source lumineuse, notamment une source laser, le rayonnement (14) étant focalisé au moins dans une zone (20) de fusion du au moins un élément (10, 12) constitutif de manière que les éléments (10, 12) constitutifs soient reliés solidement l'un à l'autre après leur refroidissement par fusion de matériau au moins dans la zone (20) de fusion associée, **caractérisé en ce que** la zone (20) de fusion est produite dans l'élément (10, 12) constitutif pouvant être traversé par un rayonnement et **en ce qu'**au moins l'un des deux éléments (10, 12) constitutifs est réalisé à la manière d'un feuille.

2. Procédé suivant la revendication 1, **caractérisé en ce que** les deux composants (10, 12) sont réalisés respectivement à la manière d'une feuille.

3. Procédé suivant l'une des revendications précédentes, **caractérisé en ce que** les éléments (10, 12) constitutifs sont placés de préférence directement côte-à-côte dans au moins une zone (44, 44') de liaison et sont soudés l'un à l'autre au moyen d'un rayonnement (14) adapté aux matériaux des éléments (10, 12) constitutifs à relier.

4. Procédé suivant l'une des revendications précédentes, **caractérisé en ce que** l'élément (10, 12) constitutif dans la zone (20) de fusion est dépourvu d'additifs absorbant le rayonnement (14) et le transformant en énergie thermique, comme par exemple des matières colorantes, des particules de suie ou d'autres pigments de couleur.

5. Procédé suivant l'une des revendications précédentes, **caractérisé en ce que** la forme, l'intensité et/ou la focalisation du rayonnement (14) sont choisies de telle manière que, dans la zone (20) de fusion associée, au moins un point d'application, au moins une ligne d'application ou au moins une surface (16) d'application se trouve ou s'étend entre les éléments (10, 12) constitutifs à relier.

6. Procédé suivant l'une des revendications précédentes, **caractérisé en ce que** la zone (20) de fusion est produite avec un diamètre ou une largeur de moins d'1 mm, de préférence de moins de 0,5 mm, et de manière encore plus préférée de moins de 0,1 mm.

7. Procédé suivant l'une des revendications précédentes, **caractérisé en ce que** la longueur d'ondes du rayonnement (14) est choisie en fonction de la capacité d'absorption du matériau de l'élément (10, 12) constitutif associé de façon à ce que se produise une absorption au moins en partie du rayonnement (14), de préférence par les deux éléments (10, 12) constitutifs à relier l'un à l'autre.

8. Procédé suivant l'une des revendications précédentes, **caractérisé en ce que** l'on utilise un rayonnement laser ayant une longueur d'ondes de préférence dans un intervalle de longueur d'ondes de 400 nm à 2 000 nm.

9. Procédé suivant l'une des revendications précédentes, **caractérisé en ce que** les éléments (10, 12) constitutifs sont soudés l'un à l'autre au moyen d'un rayonnement (14) à impulsions.

10. Procédé suivant l'une des revendications précédentes, **caractérisé en ce que** la longueur (d) de la zone (20) de fusion associée est plus petite que l'épaisseur (D) de l'élément (10, 12) constitutif associé.

11. Procédé suivant l'une des revendications précédentes, **caractérisé en ce que** le composant (10, 12) constitutif fondu au moins dans la zone (20) de fusion associée est constitué d'un matériau en matière plastique.

12. Procédé suivant l'une des revendications précédentes, **caractérisé en ce que** des éléments (10, 12) constitutifs supplémentaires à relier sont un capuchon (34, 34', 36) d'extrémité, un tube (38, 38') de support ou des parties de ces éléments.

13. Procédé suivant l'une des revendications précédentes, **caractérisé en ce que** les éléments (10, 12) constitutifs à relier l'un à l'autre sont des zones d'extrémité d'une découpe de feuille pour former une douille (40) extérieure du genre d'une enveloppe de l'élément (32, 32') de filtre.
